(19) Europäisches Patentamt
European Patent Office
Office européen des brevets

(11) **EP 2 737 373 B1**

(12) **FASCICULE DE BREVET EUROPEEN**

(45) Date de publication et mention
de la délivrance du brevet:
**24.06.2015 Bulletin 2015/26**

(21) Numéro de dépôt: **12733730.1**

(22) Date de dépôt: **11.07.2012**

(51) Int Cl.:
**G04C 3/00** *(2006.01)*  **G04G 19/12** *(2006.01)*

(86) Numéro de dépôt international:
**PCT/EP2012/063578**

(87) Numéro de publication internationale:
**WO 2013/017384 (07.02.2013 Gazette 2013/06)**

(54) **PROCEDE DE GESTION D'UNE OPERATION DE SORTIE DE VEILLE D'UNE MONTRE À AFFICHAGE NUMERIQUE**

VERFAHREN ZUR VERWALTUNG EINER FUNKTION EINER UHR MIT EINER DIGITALEN ANZEIGE ZUR BEENDIGUNG EINES STANDBY-MODUS

METHOD FOR MANAGING AN OPERATION FOR A WATCH HAVING A DIGITAL DISPLAY TO EXIT STANDBY MODE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.07.2011 FR 1157002**

(43) Date de publication de la demande:
**04.06.2014 Bulletin 2014/23**

(73) Titulaire: **Time2ego**
**95880 Enghien Les Bains (FR)**

(72) Inventeur: **PONSADA, Thomas**
**F-92800 Puteaux (FR)**

(74) Mandataire: **Camus, Olivier Jean-Claude**
**Cabinet Camus Lebkiri**
**25, Rue de Maubeuge**
**75009 Paris (FR)**

(56) Documents cités:
**EP-A1- 0 691 597      EP-A1- 1 273 983**
**EP-A1- 1 752 841      US-A- 4 036 007**
**US-A- 5 886 954**

**Description**

DOMAINE TECHNIQUE DE L'INVENTION

La présente invention concerne un procédé de gestion d'une opération de sortie de veille d'une montre à affichage numérique.

Le domaine de l'invention est, d'une manière générale, celui des montres à affichage numérique. De telles montres existent depuis plusieurs dizaines d'années aujourd'hui. Elles font le plus souvent appel à un organe régulateur, dont la fonction est de dispenser une unité de temps régulière nécessaire à l'indication du temps et de la date, de type oscillateur à quartz ; ce dernier est associé à un circuit électronique affichant l'heure sous forme numérique. L'oscillateur à quartz est le plus souvent alimenté par une pile, qui doit être remplacée par une nouvelle lorsque la pile utilisée est épuisée, les piles les plus communément utilisées étant du type piles à oxyde d'argent ou piles au lithium.

Jusqu'à présent, les affichages numériques proposés par ce type de montre demeurait en sommaires, en se contentant le plus souvent d'indiquer l'information d'heure sous forme de chiffres numériques ou d'aiguilles numériques, éventuellement en y ajoutant différentes informations, également sous forme numérique (date, fuseau horaire...)

ARRIERE-PLAN TECHNOLOGIQUE DE L'INVENTION

Les montres concernées par l'invention sont des montres dont le cadran complet est constitué d'un cadran de type écran LCD, avantageusement en couleur et présentant une haute définition, permettant ainsi de présenter notamment des images tridimensionnelles. Il s'agit donc de proposer sur une montre un affichage numérique élaboré. Les images tridimensionnelles sont avantageusement réalistes, calculées en temps réel par un processeur principal de la montre considérée.

Pour ce type de montre, il est nécessaire de trouver un compromis entre l'encombrement des différents composants électroniques intervenant pour le fonctionnement de la montre, les performances de calcul nécessaires et l'autonomie de la montre.

Ainsi, la consommation électrique liée aux calculs de rendu est un élément sensible, la pile, ou une batterie rechargeable, utilisée devant être de taille limitée, tout en étant sollicitée fortement notamment pour le rendu élaboré des images tridimensionnelles réalistes. Il est donc nécessaire de trouver une solution pour limiter la consommation en énergie de la montre considérée, sous peine de voir son autonomie en durée de fonctionnement largement limitée.

Le document EP 1 752 841 A1 décrit une montre électronique dans laquelle on utilise les données issues d'un accéléromètre pour faire sortir la montre d'un état de veille.

Les documents CH 702 862 A2 et US 2005/0276164 A1 décrivent des montres électroniques dans lesquelles un gyroscope est utilisé pour changer l'orientation d'une image affichée sur un écran de la montre.

Le document EP 2 063 329 A1 décrit une montre électronique contrôlée par des signaux GPS et dans laquelle un accéléromètre ou un gyroscope sont utilisés pour détecter si la montre est portée par un utilisateur.

DESCRIPTION GENERALE DE L'INVENTION

L'objet de l'invention offre une solution au problème qui vient d'être exposé en proposant une solution pour limiter la consommation en énergie de la montre considérée, tout en assurant un confort d'utilisation pour le porteur de la montre. A cet effet, on propose, dans l'invention de placer par défaut la montre dans un état de veille, dont elle ne sort que dans des conditions particulières d'utilisation, la sortie de l'état de veille se faisant de manière automatique, sans intervention de l'utilisateur.

L'invention concerne donc essentiellement un Procédé de gestion d'une opération de sortie de veille d'une montre, équipée d'un cadran à affichage numérique, placée dans un état de veille se traduisant notamment par une extinction du cadran,

ledit procédé étant caractérisé en ce qu'il comporte les différentes étapes consistant à :

- mémoriser au sein d'un module de mémoire de la montre, au moins un algorithme de détection d'une séquence de transition, ledit algorithme ayant été paramétré à partir d'un ensemble de données fixes préalablement déterminées révélatrices d'une séquence de transition ;
- acquérir un ensemble de données variables au moyen d'un ensemble de capteurs, ledit ensemble de capteurs comportant un accéléromètre apte à relever des données variables d'accélération de la montre selon trois directions, et un gyroscope apte à relever des données variables de position de la montre selon trois directions ;
- traiter l'ensemble de données variables au moyen de l'algorithme de détection d'une séquence de transition pour obtenir une valeur de concordance de l'ensemble de données variables traitées;
- si la valeur de concordance obtenue est supérieure à un seuil préalablement déterminé, provoquer la sortie de veille du cadran à affichage numérique.

Outre les caractéristiques principales qui viennent d'être mentionnées dans le paragraphe précédent, le procédé selon l'invention peut présenter une ou plusieurs caractéristiques complémentaires parmi les suivantes, considérées individuellement ou selon toutes les combinaisons techniquement possibles :

- l'étape d'acquisition de données variables comporte les différentes opérations consistant à :
- relever un premier groupe de données variables au moyen du gyroscope et de l'accéléromètre ;
- calculer un ensemble de données de variation additionnelles à partir du premier ensemble de données pour constituer un deuxième groupe de données variables ;
- réunir des données du premier groupe de données variables et des données du deuxième groupe de données variables pour constituer l'ensemble de données variables.
- l'ensemble de données variables est acquis sur une durée préalablement déterminée, comprise entre 0,15 seconde est 3 secondes, notamment 2 secondes.
- l'ensemble de données variables est acquis en réalisant des mesures au moyen de l'ensemble de capteurs à une fréquence comprise entre dix et cinquante hertz, notamment vingt hertz
- l'ensemble de données variables est acquis de manière continue au moyen d'un processeur intermédiaire, de type DSP dédié, de la montre, ledit processeur intermédiaire étant maintenu dans un état actif.
- l'étape de sortie de veille du cadran à affichage numérique est provoquée suite à une sortie de veille d'un processeur principal de la montre, ladite sortie de veille du processeur principal étant provoquée par la réception d'un signal, notamment un signal d'interruption émis depuis le processeur intermédiaire vers le processeur principal, ledit signal étant émis si la valeur de concordance obtenue est supérieure à un seuil préalablement déterminé.
- le procédé comporte l'étape supplémentaire consistant à relever, au moyen d'un capteur de lumière présent sur la montre, une information de luminosité, la sortie de veille du cadran à affichage numérique étant étant conditionnée à la présence d'un seuil minimal de luminosité.
- chaque séquence de transition est associée à un mouvement de la montre observé, ladite séquence de transition dépendant du fait que la montre est portée sur un poignet gauche ou du fait que la montre est portée sur un poignet droit.

La présente invention se rapporte également à une montre apte à mettre en oeuvre le procédé selon l'invention.

BREVE DESCRIPTION DES FIGURES

Les figures ne sont présentées qu'à titre indicatif et nullement limitatif de l'invention. Les figures montrent :

- à la figure 1, une représentation schématique d'une architecture des différents composants électroniques d'une montre selon l'invention;
- à la figure 2, une illustration d'un exemple d'événements intervenant pour aboutir à une sortie d'un état de veille de la montre selon l'invention.

DESCRIPTION DETAILLEE D'AU MOINS UN MODE DE REALISATION DE L'INVENTION

Sauf précision contraire, un même élément apparaissant sur des figures différentes présente une référence unique.

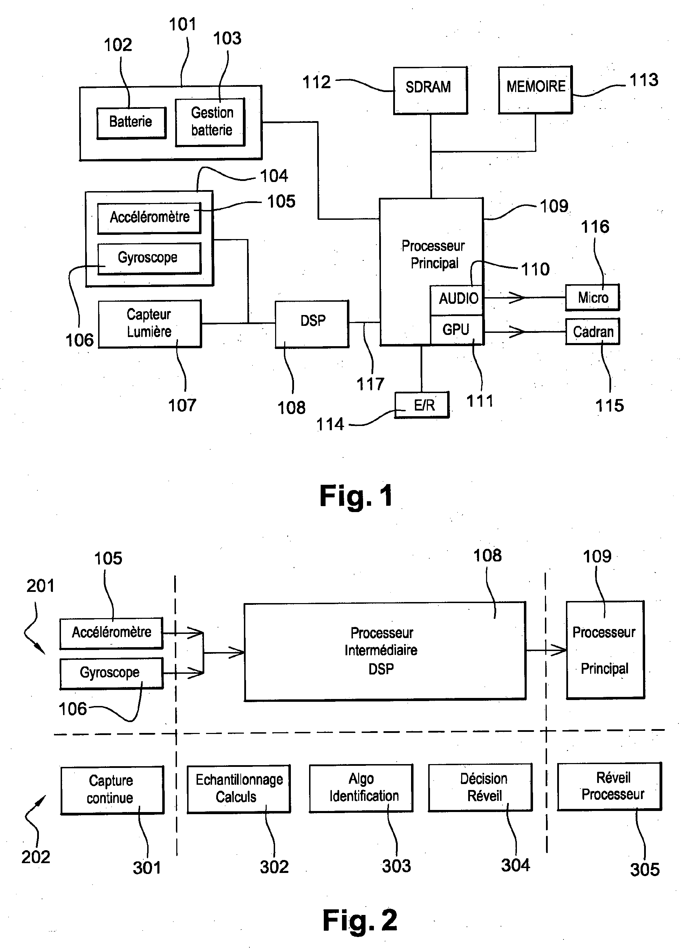

La figure 1 représente un ensemble de composants électroniques susceptibles d'intervenir dans un exemple de mise en oeuvre du procédé selon l'invention, ou d'une manière plus générale dans le fonctionnement de la montre apte à mettre en oeuvre le procédé selon l'invention. Ainsi, sur la figure 1, on a représenté, comme composants électroniques présents dans la montre, interconnectés entre eux par des bus aptes à véhiculer des signaux de commandes et/ou de données :

- une unité 101 de régulation de la consommation d'énergie, comportant un élément de type batterie 102 et un module 103 de gestion de l'utilisation de la batterie ;
- une unité 104 de détection de mouvement de la montre, comportant notamment un gyroscope 105 et un accéléromètre 106 ;
- un capteur de lumière 107 ;
- un processeur intermédiaire 108, de type processeur DSP, recevant en entrée des informations issues de l'unité 104 de détection de mouvement de la montre et du capteur de lumière 107 ;
- un processeur principal 109, dont la fonction principale est de gérer l'affichage numérique complexe sur un cadran 115 de la montre, et d'une manière plus générale, l'ensemble des fonctionnalités de la montre ; à cet effet, le processeur principal comporte notamment un module 110 destiné aux effets sonores de la montre restitués via un micro 116, et un module 111 de type GPU, qui est un module spécifique à la restitution des effets graphiques sur le cadran 115; le processeur principal 109 est relié au processeur intermédiaire au moyen d'une liaison 117 par laquelle pet transiter un signal d'interruption apte à faire sortir de processeur principal 109 d'un état de veille dans lequel il se situe, l'état de veille du processeur principal 109 correspondant à un mode de fonctionnement de celui-ci dans lequel une quantité d'énergie minimale est utilisée, les fonctions d'affichage sur le cadran 115 n'étant par exemple pas actives ;

- différents modules de mémoire, notamment une mémoire de type SDRAM 112 et une mémoire de masse 113 ;
- un module de communication 114, par exemple fonctionnant selon le protocole bluetooth, comportant au moins un module de réception, et avantageusement un module d'émission ; un tel module peut être utilisé par exemple pour la mise à jour d'algorithmes présents au sein des différents processeurs de la montre, et/ou pour le téléchargement de nouvelles images tridimensionnelles à restituer sur le cadran de la montre.

Par défaut, la montre est placée dans un mode de veille, dans lequel le cadran n'est pas activé, aucune image, ou au moins aucune image complexe, n'étant affichée. Dans l'état de veille, le processeur principal n'est pas actif, et est également placé dans un état de veille ; l'unité de régulation de consommation de l'énergie 101 permet alors d'avoir une consommation minimale en énergie de la montre.

D'une manière générale, l'état de veille de la montre est observé lorsqu'elle se trouve dans une position ou transition dans laquelle on considère que le cadran 115 n'est pas regardé par l'utilisateur ; c'est dans une telle configuration, qui est la configuration la plus fréquente lorsqu'un utilisateur porte une montre, qu'une économie d'énergie est réalisée par la montre selon l'invention.

Selon l'invention, la sortie de l'état de veille de la montre coïncide avec la détection d'une séquence de transition, correspondant à une séquence de mouvements et/ou de positions, ladite séquence de transition étant révélatrice du fait que l'utilisateur souhaite regarder le cadran 115 de sa montre. Ainsi, comme il le sera détaillé ci-dessous, c'est l'identification d'un mouvement caractéristique subi par la montre qui provoque la sortie de veille du processeur principal, et ainsi l'affichage de données complexes (par exemple de type images tridimensionnelles) sur le cadran 115 de la montre. Un tel mouvement caractéristique est typiquement un mouvement bref qui consiste à tourner le poignet pour ramener le cadran 115 de la montre dans le champ de vision de l'utilisateur, témoignant par exemple du passage de la montre d'une position dans laquelle le bras de l'utilisateur est droit le long du corps, à une position dans laquelle le bras de l'utilisateur est plié, avec le poignet incliné de manière à rendre visible le cadran 115 de la montre.

Dans le procédé selon l'invention, on propose ainsi de déterminer en temps réel, et de manière continue, dans quelle position instantanée se trouve ladite montre, tout en considérant un historique des positions précédentes et le mouvement qui a permis de passer à la position instantanée considérée. A cet effet, on propose, dans l'invention, d'utiliser un algorithme mathématique permettant de définir statistiquement si des mouvements observés de la montre correspondent ou non à une séquence de transition nécessitant la sortie de veille de la montre.

Un tel fonctionnement est détaillé en référence à la figure 2, sur laquelle on a représenté, au niveau de la partie inférieure 201, un exemple de déroulement du procédé selon l'invention, et au niveau de la partie supérieure 202, les différents composants électroniques intervenant en regard des différentes phases du procédé se déroulant au niveau de la partie inférieure 201.

Ainsi, une première étape de l'exemple de mise en oeuvre représentée consiste en une acquisition 301 de données au moyen des capteurs de la montre, notamment le gyroscope 105 et l'accéléromètre 106. L'acquisition de données est réalisée sous la forme d'une capture continue des mouvements et/ou des accélérations de la montre, éventuellement complétée par des informations d'intensité lumineuse générées par le capteur de lumière. La capture est effectuée à une fréquence comprise entre 10 et 50 Hertz, typiquement 20 Hertz, ce qui correspond à une capture de données toutes les 0,05 secondes.

L'ensemble de ces données sont communiquées au processeur intermédiaire 108 de type DSP dédié; celui-ci essentiellement trois opérations distinctes :

- une opération 302 dite d'échantillonnage et de calculs de valeurs à interpréter ;
- une opération 303 dite d'identification d'une séquence de transition, une séquence de transition correspondant à un ensemble de mouvements observés au niveau de la montre qui permettent de conclure que la montre est en position de consultation (l'utilisateur ayant manifesté son intention de la consulter), et que l'affichage sur le cadran doit être effectué ;
- une opération 304 dite de décision de réveil du processeur principal.

Lorsque la décision de réveil du processeur principal est prise, un signal d'interruption est généré depuis le processeur intermédiaire vers le processeur principal pour sortir ce dernier de son état de veille au cours d'une opération 305.

Les opérations 302, 303 et 304 sont à présent détaillées dans un exemple de mise en oeuvre du procédé selon l'invention :

L'opération 302 vise à déterminer et/ou à calculer des données variables qui sont destinées à être fournies à un algorithme de détection d'une séquence de transition ; ces données sont soit des données brutes fournies par les différents capteurs de la montre, soit des données calculées à partir de ces données brutes. Certaines valeurs ne sont calculées de manière intermédiaire - on parle alors de précalculs - , elles ne seront pas présentes dans l'ensemble de données variables effectivement utilisées par l'algorithme.

A titre d'exemple, on donne ci-dessous un groupe de données variables calculées à partir des données fournies par l'accéléromètre 106.

On précise préalablement les définitions suivantes :

-- Par X, on entend l'accélération sur l'axe X, soit sa valeur courante soit le vecteur de données
-- Par Y, on entend l'accélération sur l'axe Y, soit sa valeur courante soit le vecteur de données
-- Par Z, on entend l'accélération sur l'axe Z, soit sa valeur courante soit le vecteur de données
-- $X\_t$ désignera la valeur à l'instant t de la valeur X.

L'instant de référence pris pour 0 est le moment considéré (l'instant où l'on souhaite déterminer si l'utilisateur consulte sa montre. Par la suite, les échantillons de données sont numérotés en fonction de leur éloignement par rapport à cet instant, par exemple $X\_2$ désignera l'accélération sur X deux échantillonnages avant l'échantillonnage courant (la période d'échantillonnage étant par exemple de 0.05 sec, l'écart temporel observé correspond à 0.1 sec).

Pour les valeurs calculées, on considère les définitions suivantes :

-- Agrégations additives

Quatre agrégations additives sont utilisées :

- AGR-XY : (X+Y)/2
- AGR-YZ : (Y+Z)/2
- AGR-ZX : (Z+X)/2
- AGR-XYZ : (X+Y+Z)/3

On note que la valeur résultante est divisée par le nombre de valeurs additionnées de manière à garder un ordre de grandeur commun.

-- Dérivées discrètes

- Dérivées premières
  On calcule les dérivées premières sur les échantillons bruts et les agrégations additives. Pour X, par exemple, on calculera : d-X_0 ainsi :

$$d\text{-}X\_0 = X\_0 - X\_1$$

- Dérivées secondes
  On calcule les dérivées secondes sur les échantillons bruts et les agrégations additives. Pour X, par exemple, on calculera : d2-X_0 ainsi :

$$d2\text{-}X\_0 = d\text{-}X\_0 - d\text{-}X\_1$$

Ce qui est équivalent à :

$$d2\text{-}X\_0 = (X\_0 - X\_1) - (X\_1 - X\_2)$$

-- Moyennes mobiles

De manière à lisser les variations des différentes mesures la moyenne mobiles.

- Moyenne mobile standard

La moyenne mobile standard, SMA, (Standard Moving Average) est calculée pour toutes les valeurs d'accélération, les agrégations et les dérivées.
Cette moyenne se calcule sur une période, les valeurs SMA5, SMA20 et SMA40 moyennes sont calculées dans cet exemple,
mobiles standards sur un quart de seconde, une seconde et deux secondes.

$$SMA20\text{-}X\_0 = (SMA20\text{-}X\_0 + SMA20\text{-}X\_1 + ... + SMA20\text{-}X\_18 + SMA20\text{-}X\_19)/20$$

- Moyenne mobile exponentielle

La moyenne mobile exponentielle, EMA, (Exponential Moving Average) est calculée pour toutes les valeurs d'accélération, les agrégations et les dérivés.
Cette moyenne se calcule selon un coefficient a, que nous prendrons à 0.2 et 0.35.

$$EMA0.2\text{-}X\_0 = X\_0 * 0.2 + (1 - 0.2) * EMA0.2\text{-}X\_1$$

-- RSI

Le RSI sera calculé pour chaque accélération et chaque agrégation de manière similaire.
On le calcule sur une période comme le rapport, dit rapport RS, de la moyenne des mouvements montant divisé par la moyenne des mouvements descendants mis sous forme d'index comme suit.

$$RSI = 100 - (100/(1+RS))$$

LE RSI est calculé sur 9, 14 et 21 intervalles pour chaque accélération.

-- Ecart-type

L'écart type est calculé sur les mêmes échantillons que les moyennes et sur les mêmes périodes, comme suit :

$$STDDEV5\text{-}X\_0 = SQRT( (SMA5\text{-}X\_0 - X\_0)^2/5 + (SMA5\text{-}X\_1 - X\_1)^2/5 +...+ (SMA5\text{-}X\_4 - X\_4)^2/5 )$$

Où SQRT désigne la racine carrée.
On obtient ainsi le groupe de données suivant, à chaque instant d'échantillonnage, composé de 203 attributs:

- X
- Y
- Z
- AGR-XY
- AGR-YZ
- AGR-ZX
- AGR-XYZ
- d-X

- d-Y
- d-Z
- d-AGR-XY
- d-AGR-YZ
- d-AGR-ZX
- d-AGR-XYZ
- d2-X
- d2-Y
- d2-Z
- d2-AGR-XY
- d2-AGR-YZ
- d2-AGR-ZX
- d2-AGR-XYZ
- SMA5-X
- SMA5-Y
- SMA5-Z
- SMA5-AGR-XY
- SMA5-AGR-YZ
- SMA5-AGR-ZX
- SMA5-AGR-XYZ
- SMA5-d-X
- SMA5-d-Y
- SMA5-d-Z
- SMA5-d-AGR-XY
- SMA5-d-AGR-YZ
- SMA5-d-AGR-ZX
- SMA5-d-AGR-XYZ
- SMA5-d2-X
- SMA5-d2-Y
- SMA5-d2-Z
- SMA5-d2-AGR-XY
- SMA5-d2-AGR-YZ
- SMA5-d2-AGR-ZX
- SMA5-d2-AGR-XYZ
- SMA20-X
- SMA20-Y
- SMA20-Z
- SMA20-AGR-XY
- SMA20-AGR-YZ
- SMA20-AGR-ZX
- SMA20-AGR-XYZ
- SMA20-d-X
- SMA20-d-Y
- SMA20-d-Z
- SMA20-d-AGR-XY
- SMA20-d-AGR-YZ
- SMA20-d-AGR-ZX
- SMA20-d-AGR-XYZ
- SMA20-d2-X
- SMA20-d2-Y
- SMA20-d2-Z
- SMA20-d2-AGR-XY
- SMA20-d2-AGR-YZ
- SMA20-d2-AGR-ZX
- SMA20-d2-AGR-XYZ
- SMA40-X
- SMA40-Y
- SMA40-Z

- SMA40-AGR-XY
- SMA40-AGR-YZ
- SMA40-AGR-ZX
- SMA40-AGR-XYZ
- SMA40-d-X
- SMA40-d-Y
- SMA40-d-Z
- SMA40-d-AGR-XY
- SMA40-d-AGR-YZ
- SMA40-d-AGR-ZX
- SMA40-d-AGR-XYZ
- SMA40-d2-X
- SMA40-d2-Y
- SMA40-d2-Z
- SMA40-d2-AGR-XY
- SMA40-d2-AGR-YZ
- SMA40-d2-AGR-ZX
- SMA40-d2-AGR-XYZ
- EMA0.2-X
- EMA0.2-Y
- EMA0.2-Z
- EMA0.2-AGR-XY
- EMA0.2-AGR-YZ
- EMA0.2-AGR-ZX
- EMA0.2-AGR-XYZ
- EMA0.2-d-X
- EMA0.2-d-Y
- EMA0.2-d-Z
- EMA0.2-d-AGR-XY
- E MA0.2-d-AGR-YZ
- EMA0.2-d-AGR-ZX
- EMA0.2-d-AGR-XYZ
- EMA0.2-d2-X
- EMA0.2-d2-Y
- EMA0.2-d2-Z
- EMA0.2-d2-AGR-XY
- EMA0.2-d2-AGR-YZ
- EMA0.2-d2-AGR-ZX
- EMA0.2-d2-AGR-XYZ
- EMA0.35-X
- EMA0.35-Y
- EMA0.35-Z
- EMA0.35-AGR-XY
- EMA0.35-AGR-YZ
- EMA0.35-AGR-ZX
- EMA0.35-AGR-XYZ
- EMA0.35-d-X
- EMA0.35-d-Y
- EMA0.35-d-Z
- EMA0.35-d-AGR-XY
- EMA0.35-d-AGR-YZ
- EMA0.35-d-AGR-ZX
- EMA0.35-d-AGR-XYZ
- EMA0.35-d2-X
- EMA0.35-d2-Y
- EMA0.35-d2-Z
- EMA0.35-d2-AGR-XY
- EMA0.35-d2-AGR-YZ

- EMA0.35-d2-AGR-ZX
- EMA0.35-d2-AGR-XYZ
- RSI9-X
- RSI9-Y
- RSI9-Z
- RSI9-AGR-XY
- RSI9-AGR-YZ
- RSI9-AGR-ZX
- RSI9-AGR-XYZ
- RSI14-X
- RSI14-Y
- RSI14-Z
- RSI14-AGR-XY
- RSI14-AGR-YZ
- RSI14-AGR-ZX
- RSI14-AGR-XYZ
- RSI21-X
- RSI21-Y
- RSI21-Z
- RSI21-AGR-XY
- RSI21-AGR-YZ
- RSI21-AGR-ZX
- RSI21-AGR-XYZ
- STDDEV5-X
- STDDEV5-Y
- STDDEV5-Z
- STDDEV5-AGR-XY
- STDDEVS-AGR-YZ
- STDDEV5-AGR-ZX
- STDDEV5-AGR-XYZ
- STDDEV5-d-X
- STDDEV5-d-Y
- STDDEV5-d-Z
- STDDEV5-d-AGR-XY
- STDDEV5-d-AGR-YZ
- STDDEV5-d-AGR-ZX
- STDDEV5-d-AGR-XYZ
- STDDEV5-d2-X
- STDDEV5-d2-Y
- STDDEV5-d2-Z
- STDDEV5-d2-AGR-XY
- STDDEV5-d2-AGR-YZ
- STDDEV5-d2-AGR-ZX
- STDDEV5-d2-AGR-XYZ
- STDDEV20-X
- STDDEV20-Y
- STDDEV20-Z
- STDDEV20-AGR-XY
- STDDEV20-AGR-YZ
- STDDEV20-AGR-ZX
- STDDEV20-AGR-XYZ
- STDDEV20-d-X
- STDDEV20-d-Y
- STDDEV20-d-Z
- STDDEV20-d-AGR-XY
- STDDEV20-d-AGR-YZ
- STDDEV20-d-AGR-ZX
- STDDEV20-d-AGR-XYZ

- STDDEV20-d2-X
- STDDEV20-d2-Y
- STDDEV20-d2-Z
- STDDEV20-d2-AGR-XY
- STDDEV20-d2-AGR-YZ
- STDDEV20-d2-AGR-ZX
- STDDEV20-d2-AGR-XYZ
- STDDEV40-X
- STDDEV40-Y
- STDDEV40-Z
- STDDEV40-AGR-XY
- STDDEV40-AGR-YZ
- STDDEV40-AGR-ZX
- STDDEV40-AGR-XYZ
- STDDEV40-d-X
- STDDEV40-d-Y
- STDDEV40-d-Z
- STDDEV40-d-AGR-XY
- STDDEV40-d-AGR-YZ
- STDDEV40-d-AGR-ZX
- STDDEV40-d-AGR-XYZ
- STDDEV40-d2-X
- STDDEV40-d2-Y
- STDDEV40-d2-Z
- STDDEV40-d2-AGR-XY
- STDDEV40-d2-AGR-YZ
- STDDEV40-d2-AGR-ZX
- STDDEV40-d2-AGR-XYZ

Les moyennes mobiles sont mémorisées sous forme de différence avec un élément de référence, par exemple l'attribut EMA0.2-d-AGR-XYZ n'est pas mémorisé en tant que tel, mais est mémorisé sous la forme

$$EMA0.2\text{-}d\text{-}AGR\text{-}XYZ - d\text{-}AGR\text{-}XYZ.$$

Dans un exemple avantageux de mise en oeuvre, seules les valeurs suivantes sont utilisées par l'algorithme de détection d'une séquence de transition: STDDEV40-Y, STDDEV20-Y, RSI21-AGR-YZ, STDDEV40-d2-X et SMA40-AGR-YZ

L'opération 303 dite d'identification d'une séquence de transition, consiste à communiquer les données calculées dans l'opération 303 à l'algorithme de détection d'une séquence de transition.

L'algorithme de détection de données est un algorithme pour lequel on a déterminé un certain nombre de paramètres lors d'une phase préalable d'apprentissage, faisant intervenir une base d'apprentissage. Cette dernière est constituée par un ensemble d'exemples d'instances pour lesquels les valeurs de classes sont connues, c'est-à-dire pour lesquels on sait si l'utilisateur regardait ou non la montre au moment où on a relevé et/ou calculé les instances considérées.

La phase d'apprentissage a, de manière classique, pour objectif d'adapter un modèle de décision à l'algorithme de manière à classer au mieux les données qu'on lui fournit en entrée.

Il existe différentes variétés de modèles de décisions qui sont utilisables dans le contexte de l'invention ; on trouve par exemple :

- Les arbres de décision (on peut alors utiliser un algorithme de type ID3)
- Les réseaux de neurones
- Les régressions logistiques ; les algorithmes de régression utilisés sont alors avantageusement boostés. L'opération dite de boosting a pour objet de ne pas utiliser une seule mais plusieurs régressions afin de pouvoir ensuite agréger le résultat et avoir une meilleure fiabilité de détection.

L'opération 303 aboutit alors, par la mise en oeuvre de l'algorithme ayant fait l'objet d'une phase d'apprentissage, à une valeur de concordance obtenue à partir des données variables traitées par l'algorithme.

L'opération 304 de décision de réveil du processeur principal consiste à générer un signal d'interruption depuis le processeur intermédiaire 108 vers le processeur principal 109 lorsque la valeur de concordance est supérieure à un seuil préalablement déterminé.

Ainsi, dans le procédé selon l'invention, seul le processeur intermédiaire est actif en permanence ; celui-ci consommant peu d'énergie, et le réveil du processeur principal, fort consommateur d'énergie, n'étant ordonnée que lorsqu'une séquence de transition a été détectée, les économies en terme de consommation d'énergie sont conséquentes.

Avantageusement, le processeur principal est replacé dans un état de veille de manière relativement rapide, soit après la fin d'un compte à rebours, par exemple de dix secondes, qui aura débuté lorsque le processeur principal est sorti de veille, soit lors de la détection d'une séquence de transition inverse correspondant au retour de la montre dans une position de repos, c'est-à-dire une position dans laquelle l'utilisateur ne la consulte plus.

Pour limiter les sorties de veille erronées, on prévoit avantageusement d'utiliser les informations fournies par le capteur de lumière : ainsi, même si une séquence de transition semble avoir été détectée, une lumière insuffisante à un instant considéré est interprétable par l'algorithme de détection de séquence de transition comme une indication selon laquelle l'utilisateur ne tente pas de consulter le cadran de la montre, celle-ci étant par exemple demeurée sous la chemise de l'utilisateur ; la sortie de veille n'est alors pas observée.

**Revendications**

1. Procédé de gestion d'une opération de sortie de veille d'une montre, équipée d'un cadran à affichage numérique, placée dans un état de veille se traduisant notamment par une extinction du cadran, ledit procédé étant **caractérisé en ce qu'**il comporte les différentes étapes consistant à :

   - mémoriser au sein d'un module de mémoire de la montre, au moins un algorithme de détection d'une séquence de transition, ledit algorithme ayant été paramétré à partir d'un ensemble de données fixes préalablement déterminées révélatrices d'une séquence de transition ;
   - acquérir un ensemble de données variables au moyen d'un ensemble de capteurs, ledit ensemble de capteurs comportant un accéléromètre apte à relever des données variables d'accélération de la montre selon trois directions, et un gyroscope apte à relever des données variables de position de la montre selon trois directions ;
   - traiter l'ensemble de données variables au moyen de l'algorithme de détection d'une séquence de transition pour obtenir une valeur de concordance de l'ensemble de données variables traitées;
   - si la valeur de concordance obtenue est supérieure à un seuil préalablement déterminé, provoquer la sortie de veille du cadran à affichage numérique.

2. Procédé de gestion d'une opération de sortie de veille d'une montre selon la revendication précédente **caractérisé en ce que** l'étape d'acquisition de données variables comporte les différentes opérations consistant à :

   - relever un premier groupe de données variables au moyen du gyroscope et de l'accéléromètre ;
   - calculer un ensemble de données de variation additionnelles à partir du premier groupe de données pour constituer un deuxième groupe de données variables ;
   - réunir des données du premier groupe de données variables et des données du deuxième groupe de données variables pour constituer l'ensemble de données variables.

3. Procédé selon l'une quelconque des revendications précédentes **caractérisé en ce que** l'ensemble de données variables est acquis sur une durée préalablement déterminée, comprise entre 0,15 seconde et 3 secondes, notamment 2 secondes.

4. Procédé selon l'une quelconque des revendications précédentes **caractérisé en ce que** l'ensemble de données variables est acquis en réalisant des mesures au moyen de l'ensemble de capteurs à une fréquence comprise entre dix et cinquante hertz, notamment vingt hertz.

5. Procédé selon l'une quelconque des revendications précédentes **caractérisé en ce que** l'ensemble de données variables est acquis de manière continue au moyen d'un processeur intermédiaire, de type DSP dédié, de la montre, ledit processeur intermédiaire étant maintenu dans un état actif.

6. Procédé selon la revendication précédente **caractérisé en ce que** l'étape de sortie de veille du cadran à affichage numérique est provoquée suite à une sortie de veille d'un processeur principal de la montre, ladite sortie de veille du processeur principal étant provoquée par la réception d'un signal, notamment un signal d'interruption émis depuis le processeur intermédiaire vers le processeur principal, ledit signal étant émis si la valeur de concordance obtenue est supérieure à un seuil préalablement déterminé.

7. Procédé selon l'une quelconque des revendications précédentes **caractérisé en ce qu'**il comporte l'étape supplémentaire consistant à relever, au moyen d'un capteur de lumière présent sur la montre, une information de luminosité, la sortie de veille du cadran à affichage numérique étant conditionnée à la présence d'un seuil minimal de luminosité.

8. Procédé selon la revendication précédente **caractérisé en ce que** chaque séquence de transition est associée à un mouvement de la montre observé, des premières séquences de transition spécifiques étant prévues dans l'hypothèse où la montre est portée sur un poignet gauche, et des deuxièmes séquences de transition spécifiques étant prévues dans l'hypothèse où la montre est portée sur un poignet droit.

9. Montre comportant:

   - un cadran (115) à affichage numérique ;
   - un accéléromètre (105) ;
   - un gyroscope (106) ;
   - un processeur (109) ; et
   - un module de mémoire (113) comportant des portions d'un logiciel ;

   la montre étant configurée de telle façon que, lorsque lesdites portions de logiciel sont exécutées par ledit processeur, la montre met en oeuvre le procédé selon l'une des revendications précédentes.

**Patentansprüche**

1. Verwaltungsverfahren einer Austrittsoperation einer Armbanduhr aus dem Stand-by, die mit einem Ziffernblatt mit digitaler Anzeige ausgerüstet ist und in einen Standby-Zustand geschaltet ist, der insbesondere durch ein Erlöschen des Ziffernblatts zum Ausdruck kommt,
   wobei das genannte Verfahren **dadurch gekennzeichnet ist, dass** es die verschiedenen Stufen umfasst, bestehend aus:

   - Speicherung mindestens eines Erfassungsalgorhithmus einer Übergangssequenz innerhalb eines Speichermoduls der Armbanduhr, wobei der genannte Algorithmus ausgehend von einer Gruppe von zuvor bestimmten Daten parametriert wurde, die eine Übergangssequenz anzeigen;
   - Erwerb einer Gruppe von variablen Daten anhand einer Sensorgruppe, wobei die genannte Sensorgruppe einen Beschleunigungsmesser umfasst, der geeignet ist, variable Beschleunigungsdaten der Armbanduhr gemäß drei Richtungen zu erfassen, und ein Gyroskop, das geeignet ist, variable Positionsdaten der Armbanduhr gemäß drei Richtungen zu erfassen;
   - Verarbeitung der Gruppe von variablen Daten anhand des Erfassungsalgorithmus einer Übergangssequenz für den Erhalt eines Konkordanzwertes der Gruppe der verarbeiteten variablen Daten;
   - wenn der erhaltene Konkordanzwert einen zuvor bestimmten Schwellenwert übersteigt, Hervorrufen des Austritts des Ziffernblatts aus der digitalen Anzeige.

2. Verwaltungsverfahren einer Austrittsoperation einer Armbanduhr aus dem Stand-by gemäß dem voranstehenden Anspruch, **dadurch gekennzeichnet, dass** die Erwerbsstufe von variablen Daten die unterschiedlichen Operationen umfasst, bestehend aus:

   - Erfassung einer ersten Gruppe von variablen Daten anhand des Gyroskops und des Beschleunigungsmessers;
   - Berechnung einer Gruppe von zusätzlichen Abweichungsdaten ausgehend von der ersten Gruppe von Daten zur Bildung einer zweiten Gruppe von variablen Daten;
   - Zusammenführung der ersten Gruppe von variablen Daten und der Daten der zweiten Gruppe von variablen Daten zur Bildung der Gruppe von variablen Daten.

3. Verfahren gemäß einem der voranstehenden Ansprüche, **dadurch gekennzeichnet, dass** die Gruppe von variablen Daten über eine zuvor bestimmte Dauer erworben wird, die zwischen 0,15 Sekunden und 3 Sekunden, insbesondere 2 Sekunden inbegriffen ist.

**4.** Verfahren gemäß einem der voranstehenden Ansprüche, **dadurch gekennzeichnet, dass** die Gruppe von variablen Daten durch die Realisierung der Messungen anhand der Gruppe von Sensoren mit einer zwischen zehn und fünfzig Hertz, insbesondere zwanzig Hertz inbegriffenen Frequenz erworben wird.

**5.** Verfahren gemäß einem der voranstehenden Ansprüche, **dadurch gekennzeichnet, dass** die Gruppe von variablen Daten auf kontinuierliche Weise anhand eines Zwischenprozessors vom der Armbanduhr dedizierten Typ DSP erworben wird, wobei der genannte Zwischenprozessor in einem aktiven Zustand beibehalten wird.

**6.** Verfahren gemäß dem voranstehenden Anspruch, **dadurch gekennzeichnet, dass** die Austrittsstufe des Ziffernblattes mit digitaler Anzeige aus dem Stand-by im Anschluss an einen Austritt eines Hauptprozessors der Armbanduhr aus dem Stand-by hervorgerufen wird, wobei der genannte Austritt des Hauptprozessors aus dem Stand-by durch den Empfang eines Signals, insbesondere eines vom Zwischenprozessor zum Hauptprozessor ausgegebenen Unterbrechungssignal hervorgerufen wird, wobei das genannte Signal ausgegeben wird, wenn der erhaltene Konkordanzwert einen zuvor bestimmten Schwellenwert übersteigt.

**7.** Verfahren gemäß einem der voranstehenden Ansprüche, **dadurch gekennzeichnet, dass** es die zusätzliche Stufe umfasst, die in der Erfassung einer Helligkeitsinformation anhand eines an der Armbanduhr vorhandenen Lichtsensors besteht, wobei der Austritt des Ziffernblatts mit digitaler Anzeige aus dem Stand-by durch das Vorhandensein eines Mindest-Schwellenwertes der Helligkeit bedingt ist.

**8.** Verfahren gemäß dem voranstehenden Anspruch, **dadurch gekennzeichnet, dass** jede Übergangssequenz einer festgestellten Bewegung der Uhr zugeordnet ist, wobei erste spezifische Übergangssequenzen in der Hypothese vorgesehen sind, in der die Armbanduhr am linken Handgelenk getragen wird und die zweiten spezifischen Übergangssequenzen in der Hypothese vorgesehen sind, in der die Armbanduhr am rechten Handgelenk getragen wird.

**9.** Armbanduhr, umfassend:

- ein Ziffernblatt (115) mit digitaler Anzeige;
- einen Beschleunigungsmesser (105);
- ein Gyroskop (106);
- einen Prozessor (109); und
- ein Speichermodul (113), umfassend Abschnitte einer Software; wobei die Armbanduhr derart konfiguriert ist, dass die Armbanduhr das Verfahren gemäß den voranstehenden Ansprüchen umsetzt, wenn die genannten Softwareabschnitte durch den genannten Prozessor ausgeführt werden.

**Claims**

**1.** Method for management of an operation to awaken a watch equipped with a digital display screen that is in sleep mode, materialised particularly by the dial light going off, said method being **characterised in that** it comprises different steps consisting of:

- memorising at least one transition sequence detection algorithm within a memory module of the watch, said algorithm having been configured from a set of previously determined fixed data revealing a transition sequence;
- acquiring a set of variable data using a set of sensors, said set of sensors comprising an accelerometer capable of recording variable watch acceleration data along three directions and a gyroscope capable of reading variable watch position data according along three directions;
- processing the variable data set using the transition sequence detection algorithm to obtain a matching value of the processed variable data set;
- if the matching value obtained is higher than a previously determined threshold, bring the digital display dial out of sleep mode.

**2.** Method for management of an operation to awaken a watch from sleep mode according to the previous claim, **characterised in that** the step to acquire variable data includes different operations consisting of:

- recording a first group of variable data using the gyroscope and the accelerometer;

- calculating a set of additional variation data starting from the first data group to form a second variable data group;
- combining data in the first variable data group and data in the second variable data group to create the variable data set.

3. Method according to any one of the previous claims, **characterised in that** the variable data set is acquired over a previously determined duration between 0.15 seconds and 3 seconds, and particularly 2 seconds.

4. Method according to any one of the previous claims, **characterised in that** the variable data set is acquired by making measurements using the set of sensors at a frequency of between ten and fifty Hertz, particularly twenty Hertz.

5. Method according to any one of the previous claims, **characterised in that** the variable data set is acquired continuously by means of a dedicated intermediate DSP type processor in the watch, said intermediate processor being kept in an active state.

6. Method according to the previous claim, **characterised in that** the step to awaken the digital display dial from sleep mode is provoked by a main processor of the watch being awakened from sleep mode, said awakening of the main processor from sleep mode being provoked by reception of a signal and particularly an interrupt signal sent from the intermediate processor to the main processor, said signal being sent if the matching value obtained is higher than a previously determined threshold.

7. Method according to any one of the previous claims, **characterised in that** it comprises the additional step consisting of using a light sensor present on the watch to record a brightness information, the digital display dial possibly being awakened from sleep mode depending on whether or not a minimum brightness threshold is present.

8. Method according to the previous claim, **characterised in that** each transition sequence is associated with an observed movement of the watch, first specific transition sequences being provided assuming that the watch is being worn on a left wrist, and second specific transition sequences being provided assuming that the watch is being worn on a right wrist.

9. Watch comprising:

- a digital display dial (115);
- an accelerometer (105);
- a gyroscope (106);
- a processor (109), and
- a memory module (113) comprising portions of software; the watch being configured such that when said software portions are executed by said processor, the watch applies the method according to one of the previous claims.

## Fig. 1

## Fig. 2

**RÉFÉRENCES CITÉES DANS LA DESCRIPTION**

**Documents brevets cités dans la description**

- EP 1752841 A1
- CH 702862 A2
- US 20050276164 A1
- EP 2063329 A1